# EUROPEAN PATENT APPLICATION

(11) **EP 2 762 236 A1**
(43) Date of publication of application: **06.08.2014**
(21) Application number: 12836001.3
(22) Date of filing: 10.09.2012
(51) Int. Cl.: B05B 5/053, B05B 5/057, A61L 9/14

(54) **ELECTROSTATIC ATOMIZING DEVICE**

(30) Priority: 30.09.2011 JP 2011217340
(71) Applicant: Panasonic Corporation, Kadoma-shi, Osaka 571-8501 (JP)
(72) Inventor: KOMURA, Yasuhiro, Chuo-ku, Osaka 540-6207 (JP); ASANO, Yukiyasu, Chuo-ku, Osaka 540-6207 (JP); SUDA, Hiroshi, Chuo-ku, Osaka 540-6207 (JP); OE, Jumpei, Chuo-ku, Osaka 540-6207 (JP); MASCHI, Masaharu, Chuo-ku, Osaka 540-6207 (JP); SUMITOMO, Ayaka, Chuo-ku, Osaka 540-6207 (JP)
(74) Representative: Grünecker, Kinkeldey, Stockmair & Schwanhäusser
(86) International application number: PCT/JP2012/073049
(87) International publication number: WO 2013/047168

(57) **Abstract**

The electrostatic atomizing device according to the present invention includes: an electrode unit for applying an electric field to a liquid; and a voltage applying device to apply a drive voltage to the electrode unit in order to apply the electric field to the liquid to cause electrostatic atomization of the liquid. The drive voltage oscillates at a predetermined frequency. A basic value defining a basis for oscillation of the drive voltage is negative.

## Description

### Technical Field

The present invention relates to an electrostatic atomizing device to generate electrically charged minute water particles.

### Background Art

Document 1 (JP 2006-27209 A) discloses an electrostatic atomizing device. This electrostatic atomizing device includes: an atomizing electrode; a facing electrode facing the atomizing electrode; and a transfer and supply device to transfer a liquid to a tip of the atomizing electrode. The electrostatic atomizing device applies a voltage between the tip of the atomizing electrode and the facing electrode to cause electrostatic atomization of a liquid transferred to the tip of the atomizing electrode, thereby generating electrically charged minute water particles.

To increase an amount of the electrically charged minute water particles, it is considered to increase the voltage applied between the tip of the atomizing electrode and the facing electrode in order to supply great energy to the liquid. In this case, an arc discharge may occur. When such an arc discharge occurs, energy is consumed uselessly and thus a great amount of the electrically charged minute water particles are not generated. Additionally, control of the discharge may be lost, and unwanted sound may be produced.

### Summary of Invention

In view of the above insufficiency, the present invention has been aimed to propose an electrostatic atomizing device capable of preventing an arc discharge and increasing an amount of electrically charged minute water particles.

The electrostatic atomizing device of the first aspect in accordance with the present invention includes: an electrode unit for applying an electric field to a liquid; and a voltage applying device to apply a drive voltage to the electrode unit in order to apply the electric field to the liquid so as to cause electrostatic atomization of the liquid. The drive voltage is a voltage oscillating at a predetermined frequency. A basic value which defines a basis for oscillation of the drive voltage is negative.

According to the electrostatic atomizing device of the second aspect in accordance with the present invention, in addition to the first aspect, the basic value is a central value of oscillation of the drive voltage or is an average value of the drive voltage in one period of the drive voltage.

According to the electrostatic atomizing device of the third aspect in accordance with the present invention, in addition to the first or second aspect, a maximum value of the drive voltage is zero or more.

According to the electrostatic atomizing device of the fourth aspect in accordance with the present invention, in addition to the first or second aspect, the drive voltage is an alternating current voltage.

According to the electrostatic atomizing device of the fifth aspect in accordance with the present invention, in addition to the first or second aspect, a maximum value of the drive voltage is negative.

According to the electrostatic atomizing device of the sixth aspect in accordance with the present invention, in addition to any one of the first to fifth aspects, a maximum value of the drive voltage is greater than a discharge start voltage defined as a negative voltage causing the electrostatic atomization of the liquid to start.

According to the electrostatic atomizing device of the seventh aspect in accordance with the present invention, in addition to any one of the first to sixth aspects, the electrode unit includes a discharge electrode to hold the liquid. The voltage applying device is configured to apply the drive voltage to the discharge electrode.

According to the electrostatic atomizing device of the eighth aspect in accordance with the present invention, in addition to the seventh aspect, the electrode unit includes a facing electrode facing the discharge electrode. The facing electrode includes an opening allowing passage of a mist caused by the electrostatic atomization of the liquid. The drive voltage determines a potential relative to a potential of the facing electrode.

According to the electrostatic atomizing device of the ninth aspect in accordance with the present invention, in addition to any one of the first to sixth aspects, the electrode unit includes a discharge electrode to hold the liquid, and a facing electrode facing the discharge electrode. The facing electrode includes an opening allowing passage of a mist caused by electrostatic atomization of the liquid. The voltage applying device is configured to apply the drive voltage to the facing electrode. The drive voltage determines a potential relative to a potential of the discharge electrode.

According to the electrostatic atomizing device of the tenth aspect in accordance with the present invention, in addition to any one of the first to ninth aspects, the predetermined frequency is a high frequency.

According to the electrostatic atomizing device of the eleventh aspect in accordance with the present invention, in addition to the tenth aspect, the predetermined frequency is in a range of 50 kHz to 250 kHz.

According to the electrostatic atomizing device of the twelfth aspect in accordance with the present invention, in addition to any one of the first to eleventh aspects, the voltage applying device includes a piezoelectric device.

According to the electrostatic atomizing device of the thirteenth aspect in accordance with the present invention, in addition to any one of the first to twelfth aspects, the electrostatic atomizing device further includes a liquid provider to provide the liquid to a discharge electrode.

### Brief Description of the Drawings

**FIG. 1** is a schematic diagram of the electrostatic atomizing device of one embodiment according to the present invention;
**FIG. 2** is a graph illustrating a drive voltage applied to a discharge electrode by a voltage applying device of the electrostatic atomizing device;
**FIG. 3** is a graph illustrating the drive voltage according to the first modification;
**FIG. 4** is a graph illustrating the drive voltage according to the second modification;
**FIG. 5** is a graph illustrating a relation between the drive voltage according to the second modification and a discharge start voltage;
**FIG. 6** is a graph illustrating a relation between the drive voltage according to the second modification and the discharge start voltage;
**FIG. 7** is a sectional view of a Peltier unit of the electrostatic atomizing device;
   and
**FIG. 8** is a graph illustrating a drive voltage applied to a discharge electrode by a voltage applying device of a comparative example of the electrostatic atomizing device.

### Description of Embodiments

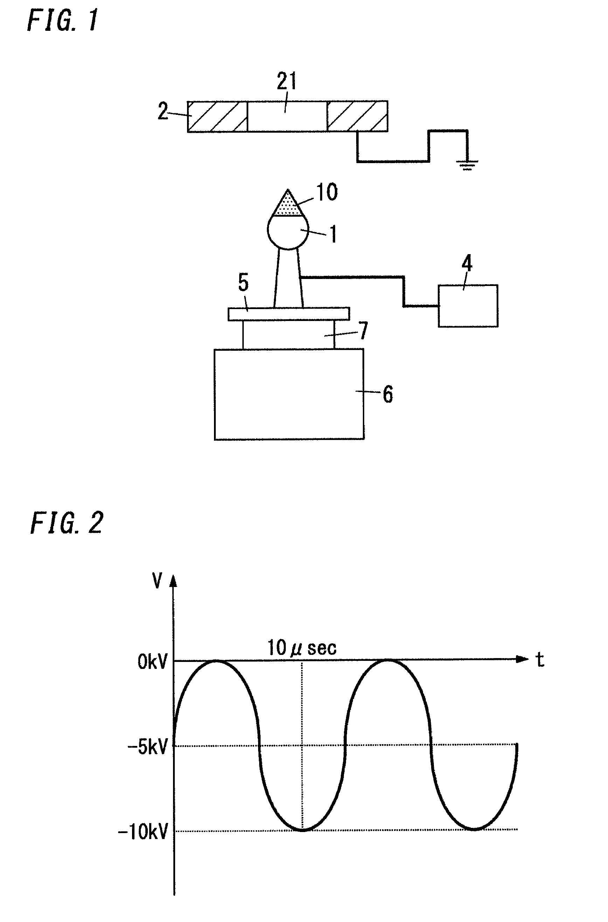

**FIG. 1** shows an electrostatic atomizing device of one embodiment according to the present invention. The electrostatic atomizing device of the present embodiment shown in **FIG. 1** includes an electrode unit for applying an electric field to a liquid 10. The electrode unit includes a discharge electrode 1 and a facing electrode **2** facing the discharge electrode **1.** Further, the electrostatic atomizing device includes a liquid provider and a voltage applying device **4.** The liquid provider is constituted by a Peltier unit **7** configured to provide the liquid 10 to the discharge electrode **1.** The voltage applying device **4** is configured to apply a voltage to a liquid provided to the discharge electrode 1 to cause electrostatic atomization.

The discharge electrode **1** is used to hold the liquid **10.** For example, the discharge electrode **1** is made of an electrically conductive material and has a bar shape. A tip of the discharge electrode **1** serves as an atomizing part for electrostatic atomization of the liquid **10.** In summary, the discharge electrode 1 is formed into a bar shape and has its tip serving as the atomizing part.

The facing electrode **2** is made of an electrically conductive material and has a plate shape. The facing electrode **2** includes an opening **21** allowing passage of a mist caused by electrostatic atomization of the liquid **10.** The facing electrode **2** is disposed facing the discharge electrode **1.** In the present embodiment, the facing electrode **2** is grounded. Hence, the facing electrode **2** has an electric potential of 0 V. In summary, the facing electrode **2** is formed into a ring shape, is placed in a position facing the tip of the discharge electrode **1,** and is grounded.

The Peltier unit **7** constituting the liquid provider is attached to: an electrically insulating plate **5** constituting a cooling part; and a heat dissipation fin **6** constituting a heat dissipation part.

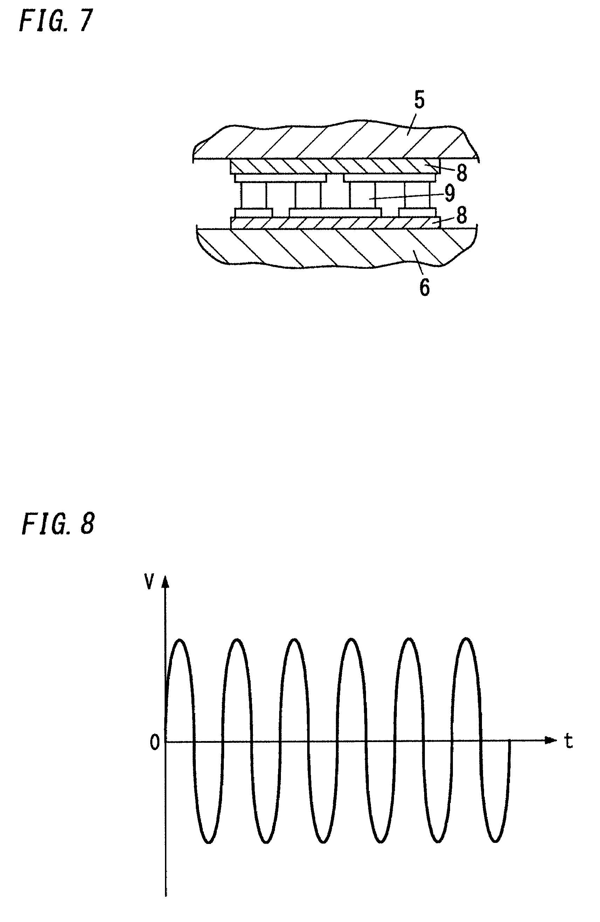

As shown in **FIG. 7****,** the Peltier unit **7** is constituted by a pair of Peltier circuit boards **8** and BiTe thermoelectric elements **9** held between the pair of Peltier circuit boards **8.**

Each of the Peltier circuit boards **8** includes an electrical insulating substrate and a circuit formed on one side of the electrically insulating substrate. The electrically insulating substrate is of a high thermally conductive material such as alumina and aluminum nitride. The Peltier circuit boards **8** are positioned such that the circuits thereof face each other.

The multiple thermoelectric elements **9** are arranged between the Peltier circuit boards **8.** The adjacent thermoelectric elements **9** are electrically connected to each other via either one of the circuits of the respective Peltier circuit boards **8.**

The electrically insulating plate **5** is connected to an outside of a first Peltier circuit board **8** which is one of the Peltier circuit boards **8,** and the heat dissipation fin **6** is connected to an outside of a second Peltier circuit board **8** which is the other of the Peltier circuit boards **8.**

As shown in **FIG.** 1, the discharge electrode **1** stands on an opposite surface of the electrically insulating plate **5** from the Peltier unit **7.** This discharge electrode **1** is thermally coupled to the first Peltier circuit board 8 through the electrically insulating plate **5.**

When a current is supplied to the thermoelectric element **9** of the Peltier unit **7** through Peltier input lead lines (not shown), heat is transferred from the first Peltier circuit board **8** coupled to the electrically insulating plate **5** to the second Peltier circuit board **8** coupled to the heat dissipation fin **6.** Consequently, the electrically insulating plate 5 is cooled. When the electrically insulating plate 5 is cooled as described above, the discharge electrode **1** is also cooled. Thus, water vapor in the air is condensed at the tip of the discharge electrode **1** and therefore turned into water (dew condensation water) on the discharge electrode **1.** In this manner, the liquid **10** is supplied to the discharge electrode **1.**

The voltage applying device **4** may be constituted by an oscillation circuit including a piezoelectric element, for example. The voltage applying device **4** is connected to the discharge electrode 1. A voltage (drive voltage) applied to the discharge electrode 1 by the voltage applying device **4** is a high frequency voltage with a frequency in a range of 50 kHz to 250 kHz, and has a negative central value as shown in **FIG. 2****.**

As described above, the voltage applying device **4** is configured to apply the drive voltage to the electrode unit to apply the electric field to the liquid 10 to cause electrostatic atomization of the liquid 10.

As shown in **FIG. 2****,** in the present embodiment, the drive voltage oscillates at a predetermined frequency. A basic value that defines a basis for oscillation of the drive voltage is negative.

The drive voltage has a sine waveform. The predetermined frequency of the drive voltage is a high frequency, and, for example, is in a range of 50 kHz to 250 kHz. The basic value is a value (voltage) defining a basis for oscillation of the drive voltage. In the present embodiment, the basic value is a central value (-5 kV) of the oscillation of the drive voltage. Therefore, the drive voltage has a maximum value of 0 kV and a minimum value of -10 kV. In brief, the maximum value of the drive voltage is not less than 0 [kV].

In the present embodiment, the facing electrode **2** is grounded. Therefore, the voltage applying device 4 applies an electrical potential (negative potential) to the discharge electrode **1** so as to generate the drive voltage between the discharge electrode **1** and the facing electrode **2.**

Alternatively, the basic value of the drive voltage may be an average value of the drive voltage in one period of the drive voltage, for example. It is sufficient that the applied voltage (drive voltage) is a high frequency voltage, and the waveform thereof is not limited to a sine waveform. For example, the drive voltage may have a saw tooth waveform, a rectangular waveform, or a triangular waveform.

To cause the electrostatic atomization by use of the electrostatic atomizing device of the present embodiment, the Peltier unit **7** is operated to supply the dew condensation water (liquid 10) to the tip of the discharge electrode **1** as described above, first. Subsequently, the high frequency voltage (drive voltage) is applied to the discharge electrode **1** by the voltage applying device **4.**

The high frequency voltage (drive voltage) applied between the discharge electrode 1 and the facing electrode **2** develops a Coulomb force between the water (liquid 10) held at the tip of the discharge electrode **1** and the facing electrode **2,** which causes the water surface to bulge locally, thereby forming a Taylor cone.

Then, electric charges are concentrated at a tip of the Taylor cone to increase the electric field intensity and therefore the Coulomb force, thereby further developing the Taylor cone.

As described above, the Taylor cone is developed and the electric charges are concentrated at the tip of the Taylor cone, and the water (the liquid 10) at the tip of the Taylor cone receives great energy (repulsion caused by high density charges) and when a surface tension of the water is exceeded, the water is caused to disintegrate repeatedly.

As a result of that, the electrically charged minute water particles of nanometer sizes are generated. These electrically charged minute water particles are charged negatively.

The electrically charged minute water particles produced in the aforementioned manner constitute a mist in a nanometer range, and are extremely small. Hence, the electrically charged minute water particles can travel through air for a long time, and can be well diffused.

This electrically charged minute water particle contains active species such as hydroxyl radicals and superoxide. Hence, the electrically charged minute water particle can decompose, deactivate, inhibit, or sterilize malodorous components, allergen substances, viruses, and bacterium.

As described above, the electrostatic atomizing device of the present embodiment is defined to include the discharge electrode **1,** the liquid provider (Peltier unit 7) to supply the liquid **10** to the discharge electrode **1,** and the voltage applying device **4** to apply the voltage to the discharge electrode **1** to cause the electrostatic atomization. The voltage applying device **4** is configured to apply to the liquid **10** the voltage which is a high frequency voltage with a negative central value.

In other words, the electrostatic atomizing device of the present embodiment includes: the electrode unit for applying the electric field to the liquid 10; and the voltage applying device **4** to apply the drive voltage to the electrode unit in order to apply the electric field to the liquid 10 so as to cause the electrostatic atomization of the liquid 10. The drive voltage is a voltage oscillating at the predetermined frequency. The basic value which defines the basis for oscillation of the drive voltage is negative.

Especially, in the electrostatic atomizing device of the present embodiment, the basic value is the central value of oscillation of the drive voltage.

Especially, in the electrostatic atomizing device of the present embodiment, the maximum value of the drive voltage is zero or more.

Especially, in the electrostatic atomizing device of the present embodiment, the electrode unit includes the discharge electrode **1** to hold the liquid 10. The voltage applying device **4** is configured to apply the drive voltage to the discharge electrode **1.**

Especially, in the electrostatic atomizing device of the present embodiment, the predetermined frequency (the predetermined frequency of the drive voltage) is a high frequency.

Especially, the electrostatic atomizing device of the present embodiment further includes the liquid provider (in the present embodiment, the Peltier unit 7) to provide the liquid to 10 the discharge electrode 1.

According to the present embodiment, to cause the electrostatic atomization, the voltage applying device **4** applies to the discharge electrode **1** the voltage which is the high frequency voltage with the negative basic value (in the present embodiment, the central value). Consequently, it is possible to prevent the arc discharge.

When the voltage (drive voltage) applied to the discharge electrode 1 is a high frequency voltage and has the maximum value of 0 V as shown in **FIG.** 2, an absolute value of the applied voltage (drive voltage) falls below an absolute value of a discharge start voltage (i.e., a negative voltage causing the electrostatic atomization of the liquid 10 to start) Vd temporarily. Hence, the electrostatic atomization is interrupted temporarily. As a result of that, the continuous arc discharge is prevented.

As described above, the arc discharge is hard to occur. The energy can be efficiently used to generate the electrically charged minute water particles. Therefore, it is possible to increase an amount of the electrically charged minute water particles generated.

Note that, when the high frequency voltage (drive voltage) applied to the discharge electrode 1 by the voltage applying device 4 is a voltage with the basic value (in the present embodiment, the central value) of 0 V shown in **FIG. 8****,** the aforementioned Taylor cone is hard to develop. Hence, to increase the amount of the electrically charged minute water particles generated, it is preferable that the basic value (in the present embodiment, the central value) of the high frequency applied voltage (drive voltage) be negative.

As described above, the electrostatic atomizing device of the present embodiment is capable of preventing the arc discharge and increasing an amount of the electrically charged minute water particles generated.

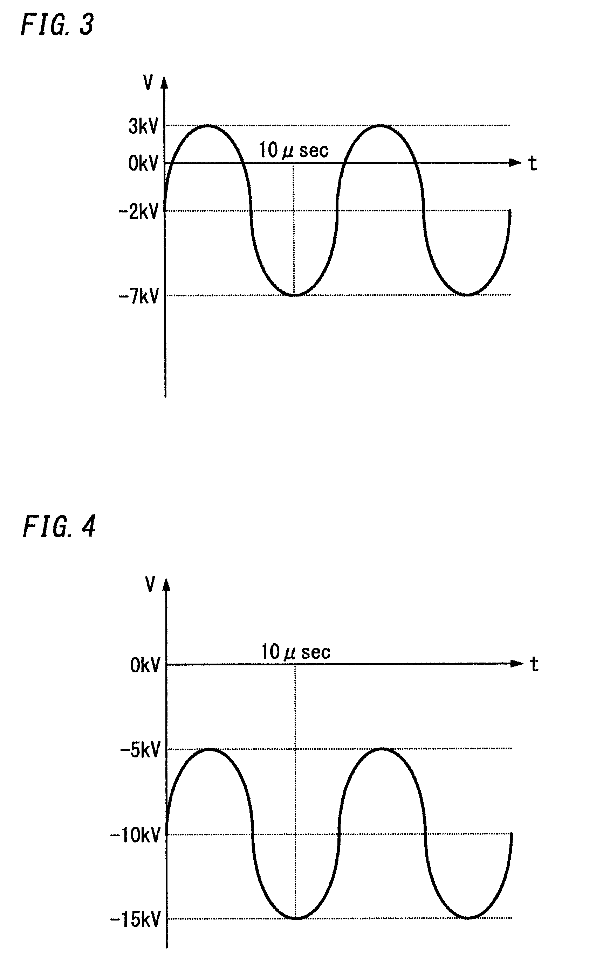

The drive voltage is not limited to the example (basic example) illustrated in **FIG. 2****.** For example, according to the first modification of the electrostatic atomizing device of the present embodiment, the voltage applying device **4** is configured to generate the drive voltage shown in **FIG. 3****.**

The drive voltage of the first modification is mainly different from the drive voltage of the basic example (see **FIG. 2****)** in the basic value. The drive voltage of the first modification has the basic value (central value) of -2 kV. Therefore, the drive voltage of the first modification has the maximum value of 3 kV and the minimum value of -7 kV. This drive voltage is an alternating current voltage.

As described above, the applied voltage (drive voltage) of the first modification is an alternating current voltage in which a positive voltage and a negative voltage are present alternately and repeatedly. In brief, in the electrostatic atomizing device of the present embodiment, the voltage applied to the liquid 10 by the voltage applying device **4** is the alternating current voltage.

In this case, air ions are captured by an electrostatic force caused by the electric field generated in response to the voltage application. Therefore, it is possible to generate the electrically charged minute water particles containing a large amount of active species.

As described above, when the voltage (drive voltage) applied to the discharge electrode 1 is a high frequency voltage and has the positive maximum value as shown in **FIG. 3** (i.e., an alternating current voltage), the absolute value of the applied voltage (drive voltage) falls below the absolute value of the discharge start voltage temporarily. As a result of that, the continuous arc discharge is prevented.

For example, according to the second modification of the electrostatic atomizing device of the present embodiment, the voltage applying device **4** is configured to generate the drive voltage shown in **FIG. 4****.**

The drive voltage of the second modification is mainly different from the drive voltage of the basic example in the basic value. The drive voltage of the second modification has the basic value (central value) of -10 kV. Therefore, the drive voltage of the second modification has the maximum value of -5 kV and the minimum value of -15 kV. The drive voltage of the second modification has the negative maximum value.

In summary, the drive voltage may be selected to have the negative maximum value, as shown in **FIG. 4****.**

Even when the voltage (drive voltage) applied to the discharge electrode 1 is always negative as shown in **FIG. 4****,** it is possible to suppress transition from the discharge to the arc discharge.

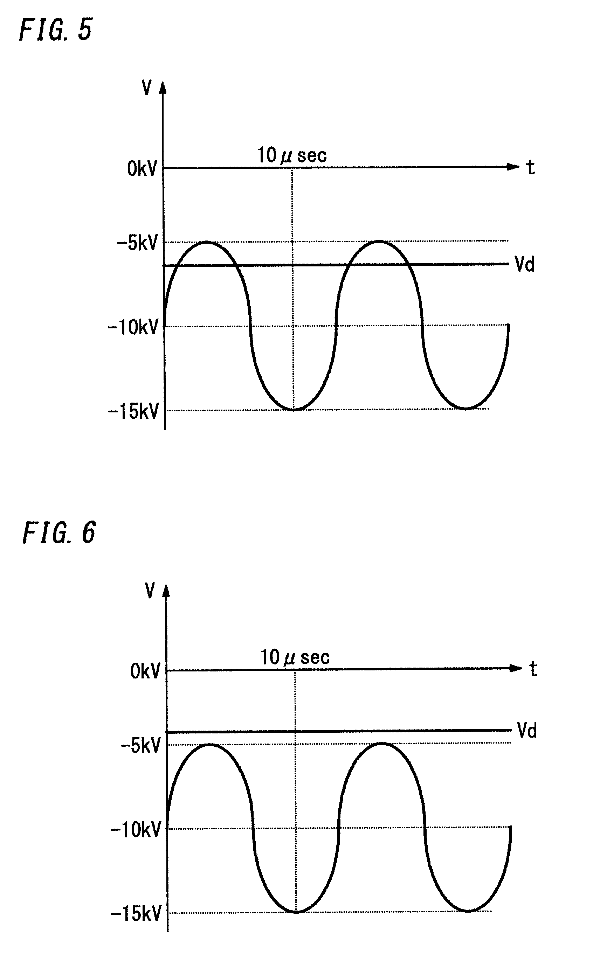

For example, as shown in **FIG. 5****,** when the discharge start voltage **Vd** is between the maximum value and the minimum value of the applied voltage (drive voltage), the absolute value of the applied voltage (drive voltage) falls below the absolute value of the discharge start voltage **Vd** temporarily, like the modifications illustrated in **FIGS. 2** and **3****.** Hence, the electrostatic atomization is interrupted temporarily. As a result of that, the continuous arc discharge is prevented.

In view of this, it is preferable that the maximum value of the drive voltage be greater than the discharge start voltage **Vd** defined as a negative voltage causing the electrostatic atomization of the liquid **10** to start.

Even when the absolute value of the applied voltage (drive voltage) is greater than the absolute value of the discharge start voltage **Vd,** the continuous arc discharge is hard to occur for the following reason.

When the applied voltage is a direct current voltage, impedance between the electrodes becomes the lowest at a site having the shortest distance between the electrodes, and therefore the discharge may occur at this site only. Whereas, when the applied voltage is a high frequency voltage, the impedance (resistance) is affected by not only the resistance between the electrodes but also other causes such as a capacitor capacitance. Thus, a slight difference in the distance between the electrodes does not affect the impedance (resistance), and therefore the discharge may occur at multiple sites. For this reason, when the applied voltage is a high frequency voltage, the transfer to the arc discharge is hard to occur.

Further, in the electrostatic atomizing device of the present embodiment, the voltage applied to the liquid 10 by the voltage applying device **4** has a frequency in a range of 50 kHz to 250 kHz. In other words, the predetermined frequency is in a range of 50 kHz to 250 kHz.

Hence, it is possible to produce a large amount of acidic components while increases in the production cost and the size of the voltage applying device **4** are suppressed.

In the electrostatic atomizing device of the present embodiment, the voltage applying device **4** includes the piezoelectric device.

Hence, it is possible to suppress increases in the production cost and the size of the voltage applying device **4.**

Further, the electrostatic atomizing device of the present embodiment includes the facing electrode 2 opposite the discharge electrode **1.** In other words, according to the electrostatic atomizing device of the present embodiment, the electrode unit includes the facing electrode **2** facing the discharge electrode **1.** The facing electrode **2** includes the opening **21** allowing passage of a mist (i.e., the electrically charged minute water particles) caused by the electrostatic atomization of the liquid **10.** The drive voltage determines a potential relative to a potential of the facing electrode 2 (in the present embodiment, 0 V).

Hence, the electrostatic atomizing device of the present embodiment can enhance the intensity of the electric field developed between the discharge electrode 1 and the facing electrode **2,** thereby increasing the amount of the electrically charged minute water particles.

Note that, the facing electrode **2** of the present embodiment is provided to enhance the intensity of the electric field developed between the discharge electrode **1** and the facing electrode **2** to produce a large amount of the electrically charged minute water particles. This facing electrode **2** is optional.

In the present embodiment, the voltage applying device **4** applies the high frequency voltage to the discharge electrode **1.** Alternatively, the voltage applying device **4** may apply a voltage to the facing electrode **2** such that a high frequency voltage same as that of the above embodiment is applied to the liquid **10** supplied to the discharge electrode 1. In other words, it is sufficient that the voltage applying device **4** applies the high frequency voltage to the liquid 10 supplied to the discharge electrode 1.

Describing in more detail, another example of the electrostatic atomizing device of the present embodiment, the electrode unit includes the discharge electrode **1** to hold the liquid 10, and the facing electrode **2** facing the discharge electrode 1. The facing electrode 2 includes the opening **21** allowing passage of a mist (the electrically charged minute water particles) caused by electrostatic atomization of the liquid **10.** The voltage applying device **4** is configured to apply the drive voltage to the facing electrode **2.** The drive voltage determines a potential relative to a potential of the discharge electrode **1.** In this example, the discharge electrode 1 is grounded, for example. Thus, the discharge electrode **1** has a potential of 0 V.

Alternatively, in the aforementioned embodiment, the frequency of the voltage applied to either one of the discharge electrode **1** or the facing electrode **2** by the voltage applying device **4** may be a high frequency which is not in a range of 50 kHz to 250 kHz.

The liquid provider is not limited to the Peltier unit **7.** The liquid provider may be a known device configured to supply water to the discharge electrode 1 from a water holder (e.g., a tank) by use of a capillary tube or the like. The liquid 10 supplied to the discharge electrode **1** by the liquid provider is not limited to water.

## Claims

1. An electrostatic atomizing device, comprising:
an electrode unit for applying an electric field to a liquid; and
a voltage applying device to apply a drive voltage to the electrode unit in order to apply the electric field to the liquid so as to cause electrostatic atomization of the liquid,
the drive voltage being a voltage oscillating at a predetermined frequency, and
a basic value which defines a basis for oscillation of the drive voltage being negative.

2. The electrostatic atomizing device according to claim 1, wherein
the basic value is a central value of oscillation of the drive voltage or is an average value of the drive voltage in one period of the drive voltage.

3. The electrostatic atomizing device according to claim 1, wherein
a maximum value of the drive voltage is zero or more.

4. The electrostatic atomizing device according to claim 3, wherein
the drive voltage is an alternating current voltage.

5. The electrostatic atomizing device according to claim 1, wherein
a maximum value of the drive voltage is negative.

6. The electrostatic atomizing device according to claim 1, wherein
a maximum value of the drive voltage is greater than a discharge start voltage defined as a negative voltage causing the electrostatic atomization of the liquid to start.

7. The electrostatic atomizing device according to claim 1, wherein:
the electrode unit includes a discharge electrode to hold the liquid; and
the voltage applying device is configured to apply the drive voltage to the discharge electrode.

8. The electrostatic atomizing device according to claim 7, wherein:
the electrode unit includes a facing electrode facing the discharge electrode;
the facing electrode includes an opening allowing passage of a mist caused by the electrostatic atomization of the liquid; and
the drive voltage determines a potential relative to a potential of the facing electrode.

9. The electrostatic atomizing device according to claim 1, wherein:
the electrode unit includes
a discharge electrode to hold the liquid, and
a facing electrode facing the discharge electrode;
the facing electrode includes an opening allowing passage of a mist caused by electrostatic atomization of the liquid;
the voltage applying device is configured to apply the drive voltage to the facing electrode; and
the drive voltage determines a potential relative to a potential of the discharge electrode.

10. The electrostatic atomizing device according to claim 1, wherein
the predetermined frequency is a high frequency.

11. The electrostatic atomizing device according to claim 10, wherein
the predetermined frequency is in a range of 50 kHz to 250 kHz.

12. The electrostatic atomizing device according to claim 1, wherein
the voltage applying device includes a piezoelectric device.

13. The electrostatic atomizing device according to claim 1, further comprising a liquid provider to provide the liquid to a discharge electrode.
